# EUROPÄISCHE PATENTSCHRIFT

(11) **EP 3 390 108 B1**
(45) Veröffentlichungstag und Bekanntmachung des Hinweises auf die Patenterteilung: **29.04.2020**
(21) Anmeldenummer: 16778703.5
(22) Anmeldetag: 21.09.2016
(51) Int. Cl.: B60C 11/03, B60C 11/13

(54) **FAHRZEUGLUFTREIFEN**
PNEUMATIC VEHICLE TYRES
PNEUMATIQUE DE VÉHICULE

(30) Priorität: 16.12.2015 DE 102015225418
(43) Veröffentlichungstag der Anmeldung: 24.10.2018
(73) Patentinhaber: Continental Reifen Deutschland GmbH, 30165 Hannover (DE)
(72) Erfinder: KRISTEN, Florian, 30171 Hannover (DE); HÄRTWIG, Andreas, 30419 Hannover (DE); YEO, Chun Yi, 30627 Hannover (DE)
(74) Vertreter: Finger, Karsten
(86) Internationale Anmeldenummer: PCT/EP2016/072380
(87) Internationale Veröffentlichungsnummer: WO 2017/102118

(56) Entgegenhaltungen:
- EP-A2- 0 235 072
- US-B1- 6 705 367

## Beschreibung

Die Erfindung betrifft einen Fahrzeugluftreifen, insbesondere einen Nutzfahrzeugreifen, mit einem Laufstreifen mit Profilpositiven, welche in Umfangsrichtung voneinander durch Querrillen getrennt sind, die vom zentralen Bereich des Laufstreifens jeweils bis zu den seitlichen Laufstreifenrändern durchgehend verlaufen und die Hauptrillen des Laufstreifens sind und zumindest über den Großteil ihres Verlaufes die maximal vorgesehene Profiltiefe aufweisen, wobei Querrillen vorgesehen sind, auf deren Rillengrund sich über den gesamten Verlauf der Querrillen erstreckend eine Reihe von Grunderhebungen ausgebildet ist, welche an die Rillenflanken der Querrillen angebunden sind.

Fahrzeugluftreifen mit einem Laufstreifen, bei welchen Querrillen die Hauptrillen sind, werden insbesondere bei Nutzfahrzeugen verwendet, die auf steinigem oder schottrigem Untergrund gefahren werden, beispielsweise im Baustelleneinsatz. Bei solchen Laufstreifen ist es besonders wichtig, dafür zu sorgen, dass sich Steine in den Hauptrillen nicht verfangen, da sie Schnittverletzungen im Laufstreifengummi verursachen können, die den Reifen bis in den Bereich des Gürtels beschädigen können und in der Folge unbrauchbar machen. Es ist daher bekannt, am Rillengrund der Hauptrillen Grunderhebungen auszubilden, die für ein wirkungsvolles Auswerfen der Steine sorgen und ein Verfangen von Steinen verhindern. Die bekannten Grunderhebungen am Rillengrund sind relativ klein dimensioniert und eng beabstandet ausgebildet, sodass in jeder Querrille eine Vielzahl solcher Erhebungen vorgesehen ist.

Aus der US 5,975,172 A ist ein Fahrzeugluftreifen mit zwei im mittleren Bereich des Laufstreifens in Umfangsrichtung umlaufenden Profilblockreihen vorgesehen, welche voneinander durch eine Umfangsrille getrennt sind. Am Rillengrund der Umfangsrille ist eine Vielzahl von in Umfangsrichtung aneinandergereihten und im Querschnitt rechteckigen Vorsprüngen ausgebildet. Diese Vorsprünge sollen ein Steineverfangen verhindern bzw. das Auswerfen von eingefangenen Steinen begünstigen. Diesen Zweck sollen auch die Vorsprünge am Rillengrund der Rillen des aus der US 6,000,451 A bekannten Laufstreifens eines Fahrzeugluftreifens erfüllen. Der Laufstreifen ist in Profilblöcke gegliedert, wobei im Zentralbereich des Laufstreifens Profilblöcke angeordnet sind, welche von Rillen umlaufen sind, auf deren Rillengrund unterschiedlich dimensionierte Vorsprünge ausgebildet sind.

Die US 6,705,367 B1 offenbart einen Nutzfahrzeugreifen mit einem Laufstreifen, welcher zumindest eine schulterseitig umlaufende Profilrippe mit laufstreifeninnenseitig innerhalb der Profilrippe endenden Querrillen aufweist. Auf dem Rillengrund einer Querrille ist zumindest am laufstreifeninnenseitigen Rillenende eine die Tiefe der jeweiligen Querrille lokal verringernde Grundanhebung ausgebildet. Ferner kann eine weitere, die Tiefe der jeweiligen Querrille lokal verringernde Grundanhebung im mittleren Bereich der Querrille vorgesehen sein.

Aus der EP 0235 072 A2 ist ein Ganzjahresreifen für Personenkraftwagen oder Light-Trucks bekannt, dessen Laufstreifen durch Querrillen voneinander getrennte Profilblöcke aufweist. In den Querrillen sind die Tiefe der jeweiligen Querrille verringernde Grundanhebungen ausgebildet, welche die Profilblöcke aneinander anbinden, diese derart stabilisieren und die Steifigkeit der Profilblockreihe erhöhen. Dadurch sollen die "Uniformity" und die Abriebeigenschaften des Laufstreifens verbessert sein.

Es ist bekannt, dass der mittlere Bereich des Laufstreifens besonders anfällig für ein Verfangen von Steinen ist. Die bislang bekannten Laufstreifen mit Grunderhebungen am Rillengrund können diesbezüglich keine optimale Lösung bieten. Der Erfindung liegt daher die Aufgabe zugrunde, einen Fahrzeugluftreifen in dieser Hinsicht zu verbessern.

Gelöst wird die gestellte Aufgabe erfindungsgemäß dadurch, dass die Grunderhebungen derart ausgebildet sind, dass ihr Gummivolumen umso geringer ist, je näher sie beim Laufstreifenrand positioniert sind.

Durch die der Erfindung zugrunde liegende Idee, Grunderhebungen, je näher sie zur Mitte des Laufstreifens liegen, umso "größer" bzw. großvolumiger auszubilden, wird einerseits im mittleren Bereich des Laufstreifens das Steineverfangen erschwert, andererseits ein "Wegtragen" etwaiger in die Querrillen eindringender Steine aus dem mittleren Bereich des Laufstreifens zur Seite, zu den Laufstreifenrändern, unterstützt. Die Erfindung hat auch einen positiven Effekt auf die Profilsteifigkeit. Im Bereich der Laufstreifenmitte ist der Laufstreifen etwas steifer, was eine etwaige Sägezahnausbildung während des Abriebes weitgehend verhindert.

Besonders vorteilhaft und bevorzugt ist eine Ausführung, bei der das Gummivolumen der in einer Querrille aneinandergereihten Grunderhebungen von Grunderhebung zu Grunderhebung schrittweise geringer wird. Bei einer möglichen Ausführungsvariante der Erfindung kann die Änderung der Gummivolumina damit einhergehen, dass die Erstreckungslängen der in einer Querrille aneinandergereihten Grunderhebungen umso geringer ist, je näher sie beim Laufstreifenrand positioniert sind, wobei vorzugsweise die Erstreckungslängen von Grunderhebung zu Grunderhebung schrittweise geringer werden. Alternativ oder zusätzlich können auch die Höhen der Grunderhebungen variiert werden. Bei einer bevorzugten Ausführung der Erfindung ist diesbezüglich die vom Niveau des Rillengrundes ermittelte Höhe zumindest bei einer der im mittleren Bereich oder bei der im zentralen Bereich des Laufstreifens positionierten Grunderhebung größer als die Höhe zumindest einer näher beim oder beim Laufstreifenrand positionierten Grunderhebung. Die Steifigkeit des Laufstreifens ist somit im mittleren Bereich größer als in den seitlichen Bereichen des Laufstreifens, wobei die Abnahme der Gummivolumina der Grunderhebungen mit einer weitgehend gleichmäßigen Abnahme der Steifigkeit von der Mitte in Richtung zu den Schulterbereichen einhergeht. Auf diese Weise wird im heiklen mittleren Bereich des Laufstreifens das Verfangen von Steinen erschwert, ferner wird der Weitertranspost zu den Schultern unterstützt und gleichzeitig werden ein gleichmäßiger Abrieb und eine gute Traktion sichergestellt.

Bevorzugt weisen zumindest jene drei Grunderhebungen, welche in einer Querrille an den Laufstreifenrand anschließend aneinandergereiht sind, eine Höhe von 5 % bis 20 % der Rillentiefe an ihrer jeweiligen Position auf.

Besonders vorteilhaft ist eine Ausführung der Erfindung, bei der die im zentralen Bereich des Laufstreifens und am weitesten laufstreifeninnenseitig ausgebildete Grunderhebung eine Höhe von 40 % bis 60 % der Rillentiefe an dieser Stelle und ferner an ihrer Basis eine Erstreckungslänge von 30 mm bis 50 mm aufweist. Diese Grunderhebungen besitzen daher ein wesentlich größeres Volumen als die in Richtung zu den Laufstreifenrändern in den Querrillen anschließend ausgebildeten weiteren Grunderhebungen. Diese Grunderhebungen verhindern somit besonderes wirkungsvoll ein Verfangen von Steinen, erhöhen die Profilsteifigkeit in diesem kritischen Bereich und verhindern dadurch auch weitgehend das Auftreten eines Cut- und Chip-Effektes, also das Entstehen von Einrissen am Rillengrund und infolge der Einrisse das Entstehen von Ausbrüchen oder Abblätterungen von Gummimaterial.

Besonders vorteilhaft ist die Erfindung bei Laufstreifen, die als Profilpositive zwei in Umfangsrichtung umlaufende Reihen von Querrippen aufweisen und laufrichtungsgebunden ausgeführt sind, wobei die Querrippen der einen Reihe und somit die zwischen ihnen verlaufenden Querrillen bezüglich der axialen Richtung gegensinnig zu den Querrippen und Querrillen der anderen Reihe verlaufen, wobei die Querrillen in einem zentralen Bereich des Laufstreifens befindliche Endabschnitte aufweisen, wobei die Endabschnitte der Querrillen und die im zentralen Bereich befindlichen Querrippenbereiche der einen Reihe mit den Endabschnitten der Querrillen und den im zentralen Bereich befindlichen Querrippenbereichen der anderen Reihe in Umfangsrichtung überlappen. Jene Grunderhebungen, welche das größte Volumen und die größte Erstreckung entlang der Querrillen aufweisen, sind in diesen Endabschnitten ausgebildet.

Für einen optimalen Steifigkeitsverlauf von der Laufstreifenmitte in Richtung Schultern ist es ferner vorteilhaft, wenn die Grunderhebungen in den Endabschnitten der Querrillen an ihren der benachbarten Grunderhebung zugewandten Endbereichen jeweils als eine in Richtung Rillengrund der Querrille abfallende Rampe ausgebildet sind, wobei die Rampenoberfläche unter einem Winkel von 35° bis 55° zum Rillengrund verläuft.

Weitere Merkmale, Vorteile und Einzelheiten der Erfindung werden nun anhand der Zeichnung, die ein Ausführungsbeispiel darstellt, näher beschrieben.

Dabei zeigen
Fig. 1 eine Draufsicht auf einen Umfangsabschnitt eines Laufstreifens eines erfindungsgemäßen Fahrzeugluftreifens,
Fig. 2 eine Schnittdarstellung entlang der Linie II-II der Fig. 1 und
Fig. 3 und Fig. 4 Querschnitte entlang der Linien III-III bzw. IV-IV der Fig. 1.

Die Erfindung befasst sich mit einer besonderen Ausgestaltung eines Laufstreifens 1 eines Fahrzeugluftreifens, insbesondere eines Nutzfahrzeugreifens oder eines Reifens für Light-Trucks, in Radialbauart. Erfindungsgemäß ausgeführte Fahrzeugluftreifen sind insbesondere für den Einsatz auf schottrigem oder steinigem Untergrund, beispielsweise auf Baustellen oder offroad vorgesehen und geeignet.

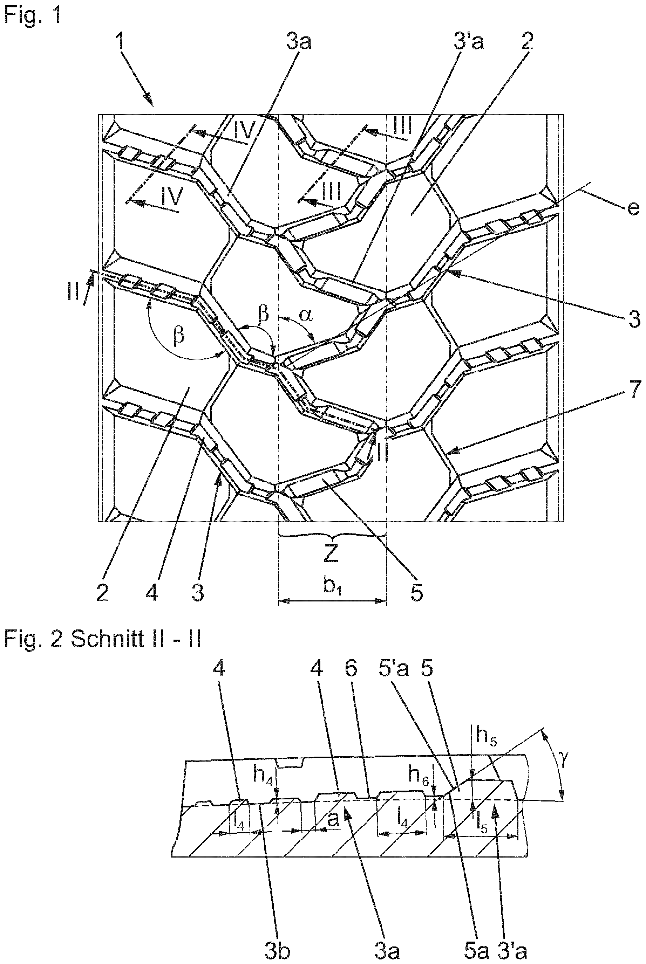

Der in Fig. 1 gezeigte Laufstreifen 1 wird von zwei in Umfangsrichtung verlaufenden Reihen aus Querrippen 2 dominiert, wobei in jeder Reihe die Querrippen 2 voneinander durch Querrillen 3 getrennt sind, welche die Hauptrillen des Laufstreifens 1 sind und zumindest über den Großteil ihres Verlaufes die für den betreffenden Reifen vorgesehene maximale Profiltiefe von beispielsweise 15 mm bis 25 mm bei Nutzfahrzeugreifen aufweisen. Unter Querrillen 3 werden im Rahmen der gegenständlichen Erfindung ferner Rillen verstanden, welche sich unter einem Winkel α ≤ 45° zur axialen Richtung erstrecken. Die Erstreckungsrichtung einer dieser Querrillen 3 ist in Fig. 1 durch eine gerade Linie e verdeutlicht. Bei der in Fig. 1 gezeigten Ausführung handelt es sich ferner um einen laufrichtungsgebunden ausgeführten Laufstreifen 1, bei welchem die Querrippen 2 der einen Reihe und damit auch die zwischen ihnen verlaufenden Querrillen 3 bezüglich der axialen Richtung gegensinnig zu den Querrippen 2 und Querrillen 3 der anderen Reihe verlaufen. Ein Fahrzeugluftreifen mit einem solchen Laufstreifen ist derart am Fahrzeug zu montieren, dass bei Vorwärtsfahrt die laufstreifeninnenseitigen Enden der Querrillen 3 zuerst in den Untergrund eintreten.

Im zentralen Bereich Z des Laufstreifens überlappen die Querrippen 2 und die Querrillen 3 der einen Reihe mit Querrippen 2 und den Querrillen 3 der anderen Reihe, die Breite des Bereiches Z und damit die Überlappungsbreite b₁ betragen in der Größenordnung von 15 % bis 30 % der Bodenaufstandsflächenbreite des Laufstreifens 1. Die Querrillen 3 und die Querrippen 2 der einen Reihe sind somit gegenüber den Querrippen 2 und den Querrillen 3 der anderen Reihe in Umfangsrichtung versetzt, wobei die laufstreifeninnenseitigen Endabschnitte der Querrillen 3 der einen Reihe in die laufstreifeninnenseitigen Endabschnitte der Querrillen 3 der anderen Reihe einmünden.

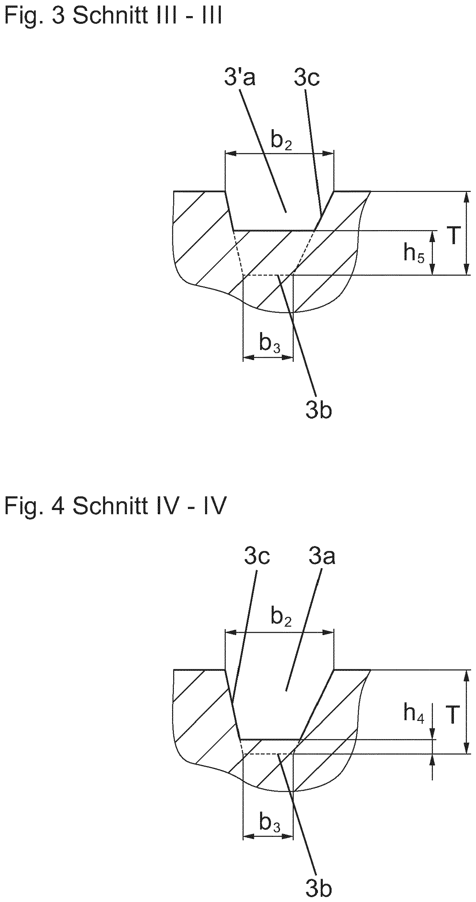

Jede Querrille 3 setzt sich aus mehreren, bei der gezeigten Ausführung fünf, zueinander in Zickzackform verlaufenden Rillenabschnitten 3a, 3'a, einem am Weitesten laufstreifeninnenseitig im zentralen Bereich Z befindlichen zentralen Rillenabschnitt 3'a und vier weiteren Rillenabschnitten 3a zusammen. Die einzelnen Rillenabschnitte 3a, 3'a schließen miteinander stumpfe Winkel β ein, welche 115° bis 155° betragen. Die Anzahl der zickzackförmig verlaufenden Rillenabschnitte 3a, 3a', die vorzugsweise unterschiedliche Erstreckungslängen aufweisen, kann drei bis sieben betragen. Es ist grundsätzlich auch möglich, dass sich die Querrillen 3 zumindest weitgehend geradlinig erstrecken. Wie den Schnittdarstellungen in Fig. 3 und Fig. 4 zu entnehmen ist, weisen die Querrillen 3 einen der üblichen Rillenquerschnitte mit im Wesentlichen V-förmig verlaufenden Rillenflanken 3c auf, wobei die Rillenöffnung zur Laufstreifenaußenseite hin breiter wird. Bei Nutzfahrzeugreifen beträgt die Breite b₂ der Querrillen 3 an der Laufstreifenaußenfläche 12 mm bis 22 mm, wobei im zentralen Bereich Z des Laufstreifens die Breite b₂ am geringsten ist und Richtung Laufstreifenrand größer wird. Die Querrillen 3 weisen ferner in den Rillenabschnitten 3a, 3'a einen Rillengrund 3b auf, dessen Breite b₃ in allen Rillenabschnitten 3a, 3'a insbesondere konstant und gleich groß ist und bei Nutzfahrzeugreifen in der Größenordnung von 3 mm bis 5 mm, vorzugsweise 4 mm, beträgt.

Entlang des Rillengrundes 3b ist eine Anzahl von mit gegenseitigem Abstand angeordneten und aneinander gereihten Grunderhebungen 4, 5 ausgebildet, die im Längsschnitt, wie es Fig. 2 zeigt, im Wesentlichen trapezförmig sind und im Querschnitt, wie es Fig. 3 und Fig. 4 zeigen, an die Rillenflanken 3c angebunden sind. Die Grunderhebungen 4 weisen an ihrer Basis gegenseitige Abstände a von 8 mm bis 13 mm auf, wobei die Abstände a im Wesentlichen gleich groß oder unterschiedlich sein können. In dem am Weitesten laufstreifeninnenseitig befindlichen zentralen Rillenabschnitt 3'a befindet sich die Grunderhebung 5, welche die größte Erstreckungslänge l₅ und die größte Höhe h₅ von allen Grunderhebungen aufweist. Der Grunderhebung 5 besitzt daher auch das größte Gummivolumen. Das Gummivolumen der Richtung Laufstreifenrand entlang des Rillengrundes 3b ausgebildeten Grunderhebungen 4 nimmt von Grunderhebung 4 zu Grunderhebung 4 schrittweise ab. Das kleinste Gummivolumen weist daher die unmittelbar beim Laufstreifenrand am Rillengrund 3b angeordnete Grunderhebung 4 auf.

Die Grunderhebungen 4 weisen an ihrer Basis unterschiedliche Erstreckungslängen l₄ auf, welche mit zunehmender Entfernung vom zentralen Bereich Z abnehmen, wobei jede Grunderhebung 4 um 10% bis 30% kürzer ist als die ihr benachbarte, weiter laufstreifeninnenseitig positionierte Grunderhebung 4. Verläuft eine Grunderhebung 4 über eine Knickstelle zwischen aufeinander folgenden Rillenabschnitten 3a, so ist ihre Erstreckungslänge die Summe der Längen ihrer Abschnitte.

Bei der gezeigten Ausführungsform ist ferner die im zentralen Bereich Z positionierte Grunderhebung 5 mit der an sie anschließenden Grunderhebung 4 sowie diese mit der an sie anschließenden Grunderhebung 4 durch am Rillengrund 3b ausgebildete stegartige flache Erhebungen 6 verbunden. Die Erhebungen 6 weisen an ihrer Basis am Rillengrund 3b eine Höhe h₆ von 0,5 mm bis 1,5 mm auf. Es ist möglich, zwischen beliebigen Grunderhebungen flache Erhebungen 6 vorzusehen oder überhaupt keine.

Die Richtung Laufstreifenrand geringer werdenden Gummivolumina der Grunderhebungen 4, 5 sind vorzugsweise auch, abgesehen von der schrittweise geringer werdenden Erstreckungslänge l₄,l₅ der Grunderhebungen 4, 5, durch geringer werdende Höhen h₄, h₅ der Grunderhebungen 4, 5 bedingt. Die Höhe h₅ der am weitesten laufstreifeninnenseitig im zentralen Bereich Z ausgebildeten Grunderhebung 5 beträgt 40% bis 60% der Rillentiefe T. Die Höhen h₄ der an die Grunderhebung 5 anschließenden Grunderhebungen 4 beträgt 5% bis 20 % der Rillentiefe T. Bei der gezeigten Ausführung weisen die beiden auf die Grunderhebung 5 folgenden Grunderhebungen 4 gleiche Höhen h₄ auf, ebenso die drei an diese anschließenden Grunderhebungen 4, wobei deren Höhen h₄ geringer sind. Bei alternativen Ausführungsformen sind die Grunderhebungen 4 entweder derart ausgeführt, dass ihre Höhen schrittweise umso geringer werden, je näher sie beim Laufstreifenrand positioniert sind oder derart ausgeführt, dass sie sämtlich gleiche Höhen aufweisen.

Die im zentralen Bereich Z des Laufstreifens 1 und im am weitesten laufstreifeninnenseitig befindlichen Rillenabschnitt 3'a angeordnete Grunderhebung 5 besitzt, wie erwähnt, das größte Gummivolumen von allen Grunderhebungen, ihr Gummivolumen beträgt zumindest das Fünffache des Gummivolumens der ihr benachbarten Grunderhebung 4. Der der benachbarten Grunderhebung 4 zugewandte Endabschnitt der Grunderhebung 5 ist als eine in Richtung dieser Grunderhebung 4 abfallende Rampe 5a ausgebildet, wobei die Rampenoberfläche 5'a unter einem Winkel γ von 35° bis 55° zur Ebene des Rillengrundes 3b verläuft.

Die Dimensionierung der Grunderhebungen 4, 5 wird in den jeweiligen Reifengrößen in Abhängigkeit von der Profiltiefe angepasst, welche beispielsweise bei Nutzfahrzeugreifen 15 mm bis 25 mm beträgt.

### Bezugsziffernliste

- 1: Laufstreifen
- 2: Querrippe
- 3: Querrille
- 3a, 3'a: Rillenabschnitt
- 3b: Rillengrund
- 3c: Rillenflanke
- 4, 5: Grunderhebung
- 5a: Rampe
- 5'a: Rampenfläche
- 6: Erhebung
- b₁, b₂, b₃: Breite
- e: Linie
- l₄, l₅: Erstreckungslänge
- α, β, γ: Winkel
- a: Abstand
- h₄, h₅, h₆: Höhe
- Z: zentraler Bereich

## Patentansprüche

1. Fahrzeugluftreifen, insbesondere Nutzfahrzeugreifen, mit einem Laufstreifen mit Profilpositiven, welche in Umfangsrichtung voneinander durch Querrillen (3) getrennt sind, die vom zentralen Bereich (Z) des Laufstreifens jeweils bis zu den seitlichen Laufstreifenrändern durchgehend verlaufen und die Hauptrillen des Laufstreifens sind und zumindest über den Großteil ihres Verlaufes die maximal vorgesehene Profiltiefe aufweisen, wobei Querrillen (3) vorgesehen sind, auf deren Rillengrund (3b) sich über den gesamten Verlauf der Querrillen (3) erstreckend eine Reihe von Grunderhebungen (4, 5) ausgebildet ist, welche an die Rillenflanken (3c) der Querrillen (3) angebunden sind,
**dadurch gekennzeichnet,**
**dass** die Grunderhebungen (4, 5) derart ausgebildet sind, dass ihr Gummivolumen umso geringer ist je näher sie beim Laufstreifenrand positioniert sind.

2. Fahrzeugluftreifen nach Anspruch 1, **dadurch gekennzeichnet, dass** das Gummivolumen der in einer Querrille (3) aneinandergereihten Grunderhebungen (4, 5) von Grunderhebung (4, 5) zu Grunderhebung (4, 5) schrittweise geringer wird.

3. Fahrzeugluftreifen nach einem Anspruch 1 oder 2, **dadurch gekennzeichnet, dass** die Erstreckungslängen (l₄, l₅) der in einer Querrille (3) aneinandergereihten Grunderhebungen (4, 5) umso geringer ist, je näher sie beim Laufstreifenrand positioniert sind.

4. Fahrzeugluftreifen nach einem der Ansprüche 1 bis 3, **dadurch gekennzeichnet, dass** die Erstreckungslängen (l4, l₅) der in einer Querrille (3) aneinandergereihten Grunderhebungen (4, 5) Richtung Laufstreifenrand von Grunderhebung (4, 5) zu Grunderhebung (4, 5) schrittweise geringer werden.

5. Fahrzeugluftreifen nach einem der Ansprüche 1 bis 4, **dadurch gekennzeichnet, dass** die vom Niveau des Rillengrundes (3a, 3'a) ermittelte Höhe (h₄, h₅) zumindest einer der im mittleren Bereich oder der im zentralen Bereich (Z) des Laufstreifens positionierten Grunderhebung (4, 5) größer ist als die Höhe (h₄) zumindest einer näher beim oder beim Laufstreifenrand positionierten Grunderhebung (4).

6. Fahrzeugluftreifen nach einem der Ansprüche 1 bis 5, **dadurch gekennzeichnet, dass** zumindest jene drei Grunderhebungen (4), welche in einer Querrille (3) an den Laufstreifenrand anschließend aneinandergereiht sind, eine Höhe (h₄) von 5% bis 20 % der Rillentiefe (T) an ihrer jeweiligen Position aufweisen.

7. Fahrzeugluftreifen nach einem der Ansprüche 1 bis 6, **dadurch gekennzeichnet, dass** die im zentralen Bereich (Z) des Laufstreifens und am weitesten laufstreifeninnenseitig ausgebildete Grunderhebung eine Höhe (h₅) von 40% bis 60% der Rillentiefe (T) an dieser Stelle und an ihrer Basis eine Erstreckungslänge (l₅) von 30 mm bis 50 mm aufweist.

8. Fahrzeugluftreifen nach einem der Ansprüche 1 bis 7, **dadurch gekennzeichnet, dass** der Laufstreifen als Profilpositive zwei in Umfangsrichtung umlaufende Reihen von Querrippen (2) aufweist und laufrichtungsgebunden ausgeführt ist, wobei die Querrippen (2) der einen Reihe und somit die zwischen ihnen verlaufenden Querrillen (3) bezüglich der axialen Richtung gegensinnig zu den Querrippen (2) und Querrillen (3) der anderen Reihe verlaufen, wobei die Querrillen (3) in einem zentralen Bereich (Z) des Laufstreifens (1) befindliche Endabschnitte (3'a) aufweisen, wobei die Endabschnitte (3'a) der Querrillen (3) und die im zentralen Bereich befindlichen Querrippenbereiche der einen Reihe mit den Endabschnitten (3'a) der Querrillen (3) und den im zentralen Bereich befindlichen Querrippenbereichen der anderen Reihe in Umfangsrichtung überlappen, und wobei die am weitesten laufstreifeninnenseitig ausgebildeten Grunderhebungen (5) in diesen Endabschnitten (3'a) ausgebildet sind.

9. Fahrzeugluftreifen nach Anspruch 7 oder 8, **dadurch gekennzeichnet, dass** die Grunderhebungen (5) in den Endabschnitten der Querrillen (3) an ihren der benachbarten Grunderhebung (4) zugewandten Endbereichen jeweils als eine in Richtung Rillengrund (3b) der Querrille (3) abfallende Rampe (5a) ausgebildet sind, wobei die Rampenoberfläche (5'a) unter einem Winkel (γ) von 35° bis 55° zum Rillengrund (3b) verläuft.

## Claims

1. Pneumatic vehicle tire, in particular utility vehicle tire, having a tread with profile positives which are separated from one another in a circumferential direction by transverse channels (3) which extend continuously from the central region (Z) of the tread in each case as far as the lateral tread edges and which are main channels of the tread and which, at least over the major part of the course thereof, have the maximum provided profile depth, wherein transverse channels (3) are provided, on the channel base (3b) of which a row of base elevations (4, 5) is formed so as to extend over the entire course of the transverse channels (3), which base elevations are attached to the channel flanks (3c) of the transverse channels (3) ,
**characterized**
**in that** the base elevations (4, 5) are designed such that their rubber volume becomes smaller the closer to the tread edge they are positioned.

2. Pneumatic vehicle tire according to Claim 1,
**characterized in that** the rubber volume of the base elevations (4, 5) lined up together in one transverse channel (3) becomes smaller in stepped fashion from base elevation (4, 5) to base elevation (4, 5).

3. Pneumatic vehicle tire according to one of Claims 1 or 2, **characterized in that** the extent lengths (l₄, l₅) of the base elevations (4, 5) lined up together in one transverse channel (3) becomes smaller the closer to the tread edge they are positioned.

4. Pneumatic vehicle tire according to one of Claims 1 to 3, **characterized in that** the extent lengths (l₄, l₅) of the base elevations (4, 5) lined up together in one transverse channel (3) become smaller in stepped fashion from base elevation (4, 5) to base elevation (4, 5) in the direction of the tread edge.

5. Pneumatic vehicle tire according to one of Claims 1 to 4, **characterized in that** the height (h₄, h₅), determined from the level of the channel base (3a, 3'a), of at least one base elevation (4, 5) positioned in the middle region or in the central region (Z) of the tread is greater than the height (h₄) of at least one base elevation (4) positioned closer to or at the tread edge.

6. Pneumatic vehicle tire according to one of Claims 1 to 5, **characterized in that** at least those three base elevations (4) which are lined up together in one transverse channel adjacent to the tread edge have a height (h₄) of 5% to 20% of the channel depth (T) at their respective position.

7. Pneumatic vehicle tire according to one of Claims 1 to 6, **characterized in that** the base elevation formed in the central region (Z) of the tread and furthest toward the inside of the tread has a height (h₅) of 40% to 60% of the channel depth (T) at this location and furthermore, at its base, has an extent length l₅) of 30 mm to 50 mm.

8. Pneumatic vehicle tire according to one of Claims 1 to 7, **characterized in that** the tread has, as profile positives, two rows of transverse ribs (2) which are of encircling form in the circumferential direction, and the tread is of directional design, wherein the transverse ribs (2) of one row, and thus the transverse channels (3) running between said transverse ribs (2), run, with respect to the axial direction, oppositely in relation to the transverse ribs (2) and transverse channels (3) of the other row, wherein the transverse channels (3) have end sections (3'a) situated in a central region (Z) of the tread (1), wherein the end sections (3'a) of the transverse channels (3) and the transverse rib regions, situated in the central region, of one row overlap in the circumferential direction with the end sections (3'a) of the transverse channels (3) and with the transverse rib regions, situated in the central region, of the other row, and wherein the base elevations (5) formed furthest to the inside of the tread are formed in these end sections (3'a).

9. Pneumatic vehicle tire according to Claim 7 or 8,
**characterized in that** the base elevations (5) in the end sections of the transverse channels (3) are formed, at their end regions facing the adjacent base elevation (4), in each case as a ramp (5a) which slopes downward in the direction of the channel base (3b) of the transverse channel (3), wherein the ramp surface (5'a) runs at an angle (γ) of 35° to 55° with respect to the channel base (3b).

## Revendications

1. Pneumatique de véhicule, en particulier pneu de véhicule utilitaire, comprenant une bande de roulement comprenant des parties profilées positives qui sont séparées les unes des autres dans la direction périphérique par des rainures transversales (3) qui s'étendent en continu depuis la région centrale (Z) de la bande de roulement à chaque fois jusqu'aux bords latéraux de la bande de roulement et qui sont les rainures principales de la bande de roulement et présentent, au moins sur la majeure partie de leur étendue, la profondeur de profilé maximale prévue, des rainures transversales (3) étant prévues, sur le fond de rainure (3b) desquelles est réalisée une série de rehaussements de base (4, 5) s'étendant sur toute l'étendue des rainures transversales (3), qui sont raccordés aux flancs de rainure (3c) des rainures transversales (3),
**caractérisé en ce que**
les rehaussements de base (4, 5) sont réalisés de telle sorte que leur volume de caoutchouc soit d'autant plus faible qu'ils sont positionnés plus près du bord de la bande de roulement.

2. Pneumatique de véhicule selon la revendication 1,
**caractérisé en ce que** le volume de caoutchouc des rehaussements de base (4, 5) alignés en rangées les uns à côté des autres dans une rainure transversale (3) devient de plus en plus petit progressivement d'un rehaussement de base (4, 5) au rehaussement de base suivant (4, 5).

3. Pneumatique de véhicule selon l'une quelconque des revendications 1 et 2, **caractérisé en ce que** les longueurs d'étendue (l₄, l₅) des rehaussements de base (4, 5) alignés en rangées les uns à côté des autres dans une rainure transversale (3) sont d'autant plus petites qu'ils sont positionnés plus près du bord de la bande de roulement.

4. Pneumatique de véhicule selon l'une quelconque des revendications 1 à 3, **caractérisé en ce que** les longueurs d'étendue (l₄, l₅) des rehaussements de base (4, 5) alignés en rangées les uns à côté des autres dans une rainure transversale (3) sont de plus en plus petites progressivement dans la direction du bord de la bande de roulement d'un rehaussement de base (4, 5) au rehaussement de base suivant (4, 5).

5. Pneumatique de véhicule selon l'une quelconque des revendications 1 à 4, **caractérisé en ce que** la hauteur (h₄, h₅) déterminée depuis le niveau du fond de rainure (3a, 3'a) d'au moins l'un des rehaussements de base (4, 5) positionnés dans la région du milieu, ou du rehaussement de base (4, 5) positionné dans la région centrale (Z) de la bande de roulement, est supérieure à la hauteur (h₄) d'au moins un rehaussement de base (4) positionné plus près du bord de la bande de roulement ou au niveau du bord de la bande de roulement.

6. Pneumatique de véhicule selon l'une quelconque des revendications 1 à 5, **caractérisé en ce qu'**au moins les trois rehaussements de base (4) qui sont alignés en rangées les uns à côté des autres en se raccordant au bord de la bande de roulement dans une rainure transversale (3) présentent une hauteur (h₄) de 5 % à 20 % de la profondeur de rainure (T) au niveau de sa position respective.

7. Pneumatique de véhicule selon l'une quelconque des revendications 1 à 6, **caractérisé en ce que** le rehaussement de base réalisé dans la région centrale (7) de la bande de roulement et le plus loin du côté intérieur de la bande de roulement présente une hauteur (h₅) de 40 % à 60 % de la profondeur de rainure (T) à cet endroit, et au niveau de sa base, une longueur d'étendue (l₅) de 30 mm à 50 mm.

8. Pneumatique de véhicule selon l'une quelconque des revendications 1 à 7, **caractérisé en ce que** la bande de roulement présente, en tant que partie profilée positive, deux rangées de nervures transversales (2) s'étendant dans la direction périphérique et est réalisée de manière associée à la direction de roulement, les nervures transversales (2) de l'une des rangées et par conséquent les rainures transversales (3) s'étendant entre elles, s'étendant par rapport à la direction axiale en sens inverse par rapport aux nervures transversales (2) et aux rainures transversales (3) de l'autre rangée, les rainures transversales (3) présentant des portions d'extrémité (3'a) se trouvant dans une région centrale (Z) de la bande de roulement (1), les portions d'extrémité (3'a) des rainures transversales (3) et les régions de nervures transversales se trouvant dans la région centrale de l'une des rangées chevauchant les portions d'extrémité (3'a) des rainures transversales (3) et les régions des nervures transversales se trouvant dans la région centrale de l'autre rangée dans la direction périphérique, et les rehaussements de base (5) réalisés le plus loin du côté intérieur de la bande de roulement étant réalisés dans ces portions d'extrémité (3'a).

9. Pneumatique de véhicule selon la revendication 7 ou 8, **caractérisé en ce que** les rehaussements de base (5) sont réalisés dans les portions d'extrémité des rainures transversales (3) au niveau de leurs régions d'extrémité tournées vers le rehaussement de base adjacent (4) à chaque fois sous la forme d'une rampe (5a) descendant dans la direction du fond de rainure (3b) de la rainure transversale (3), la surface de rampe (5'a) s'étendant suivant un angle (γ) de 35° à 55° par rapport au fond de rainure (3b).
